# EUROPEAN PATENT APPLICATION

(11) **EP 4 443 416 A1**
(43) Date of publication of application: **09.10.2024**
(21) Application number: 22901869.2
(22) Date of filing: 02.12.2022
(51) Int. Cl.: G09G 5/00, H04N 5/44, G06F 11/10, G06F 11/07

(54) **DEVICE FOR DRIVING DISPLAY PANEL, AND DRIVING METHOD**

(30) Priority: 03.12.2021 KR 20210172230
(71) Applicant: LX Semicon Co., Ltd., Daejeon 34027 (KR)
(72) Inventor: KIM, Do Seok, Daejeon 34027 (KR); MUN, Yong Hwan, Daejeon 34027 (KR); KIM, Myung Yu, Daejeon 34027 (KR); CHO, Hyun Pyo, Daejeon 34027 (KR)
(74) Representative: Goddar, Heinz J.
(86) International application number: PCT/KR2022/019506
(87) International publication number: WO 2023/101511

(57) **Abstract**

An embodiment of this disclosure is a technology for driving a display panel, and provides a technology for improving the accuracy and efficiency of data validity verification by verifying data efficiency in data communication in different ways depending on the type and operation of the sent/received data.

## Description

### BACKGROUND

### 1. Field of Technology

The present disclosure relates to a technology for driving a display device.

### 2. Related Technology

A display panel is composed of a plurality of pixels arranged in a matrix form, and each pixel may have a color such as red (R), green (G), and blue (B), and displays an image on a display panel while emitting light in grayscale levels for image data.

The image data is sent from a data processing device to a data driving device. The image data is sent as a digital value, and the data driving device converts the image data into an analog voltage to drive each pixel.

Since the image data indicates the grayscale value of each pixel individually or independently, the amount of the image data increases with increasing numbers of pixels arranged on the display panel. Also, the amount of image data to be transmitted per unit time increases with increasing frame rate.

As the display panel has recently become higher resolution, both the number of pixels arranged on the display panel and the frame rate have increased. In order to process the increased amounts of image data for higher resolutions, data communication in a display device is getting faster.

The discussions in this section are only to provide background information and do not constitute an admission of prior art.

### SUMMARY

In this background, an aspect of the present disclosure is to provide a technology for improving the performance of high-speed data communication.

To accomplish the above-mentioned aspect, an exemplary embodiment of the present disclosure provides a display driving device including: a first communication circuit which receives first data at a first data rate via a communication line and determines whether the first data has an error according to a first rule; a second communication circuit which receives second data via the communication line at a second data rate which is higher than the first data rate, and which determines whether the second data has an error according to a second rule which is different from the first rule; and a circuit that controls pixels on a display panel to be driven in accordance with image data included in the second data.

The second communication circuit may decode each unit of data of the second data according to a decoding table, and, upon finding out that a unit of data included in the second data is not included in the decoding table, may determine that the second data is erroneous data.

Upon finding out that the second data which is encoded by LRLC (Limited Run Length Code) has a run length that exceeds a reference value, the second communication circuit may determine that the second data is erroneous data.

Another exemplary embodiment of the present disclosure provides a display driving device including: a first communication circuit which sends first data and first verification data for the first data at a first data rate via a communication line; and a second communication circuit which sends second data including image data for driving pixels on a display panel via the communication line at a second data rate which is higher than the first data rate, and sends second verification data corresponding to the first verification data at the second data rate.

Yet another exemplary embodiment of the present disclosure provides a display driving method including: receiving first data at a first data rate via a communication line and determines whether the first data has an error according to a first rule; receiving second data via the communication line at a second data rate which is higher than the first data rate, and which determines whether the second data has an error according to a second rule which is different from the first rule; and controlling pixels on a display panel to be driven in accordance with image data included in the second data.

The display driving method may further include receiving third data at the second data, the determining of whether the second data has an error includes determining whether the first data has an error by checking a CRC (cyclical redundancy check) value, and the receiving of third data includes determining whether there is a communication error by comparing a CRC comparison value included in the third data and the CRC check value.

As described above, according to an embodiment of this disclosure, the accuracy and efficiency of data validity verification may be improved by verifying data validity in data communication in different ways depending on the type and operation mode of sent/received data. Also, according to an embodiment of this disclosure, the amount of power consumed in data communication may be reduced, and the probability of an erroneous operation of entering into the power-saving mode due to a communication error may be minimized. Moreover, according to an embodiment of this disclosure, in the case of an error in one of a plurality of data driving devices, all of the data driving devices may be reset simultaneously, and the operation modes of the data driving device and the data processing device may be synchronized easily. Moreover, according to an embodiment of this disclosure, it becomes easier to manage the operation modes of the data driving device and the data processing device, and the time for recovery from error may be minimized.

### BRIEF DESCRIPTION OF THE DRAWINGS

FIG. 1 is a configuration diagram of a display device according to an embodiment.
FIG. 2 is a view showing main communication and auxiliary communication between a data processing device and a data driving device according to an embodiment.
FIG. 3 is a configuration diagram of a portion of a first data driving integrated circuit of FIG. 2 that processes an auxiliary communication signal.
FIG. 4 is a configuration diagram of the data processing device according to an embodiment of the present disclosure.
FIG. 5 is an illustration of a protocol of a main communication signal transmitted in Manchester code.
FIG. 6 is a configuration diagram of the data processing device according to an embodiment.
FIG. 7 is a view showing a sequence of a primary signal according to an embodiment.
FIG. 8 is a configuration diagram of a setting data packet according to an embodiment.
FIG. 9 is a configuration diagram of a line data packet according to an embodiment.
FIG. 10 is a configuration diagram of a control data packet according to an embodiment.
FIG. 11 is a flowchart of a data validity verification method according to an embodiment.
FIG. 12 is a view showing how a data driving integrated circuit according to an embodiment ignores an auxiliary communication signal transmitted from another data driving integrated circuit.
FIG. 13 is a view showing how a data driving integrated circuit according to an embodiment bypasses an auxiliary communication signal transmitted from another data driving integrated circuit.
FIG. 14 is an illustration of a symbol setting value according to an embodiment.
FIG. 15 is a view showing how a bit error in a symbol is corrected according to an embodiment.
FIG. 16 is a view showing a mode conversion sequence for a display driving device according to an embodiment.
FIG. 17 is a view showing a sequence of a low-power operation performed by a display driving device according to an embodiment.

### DETAILED DESCRIPTION OF EMBODIMENTS

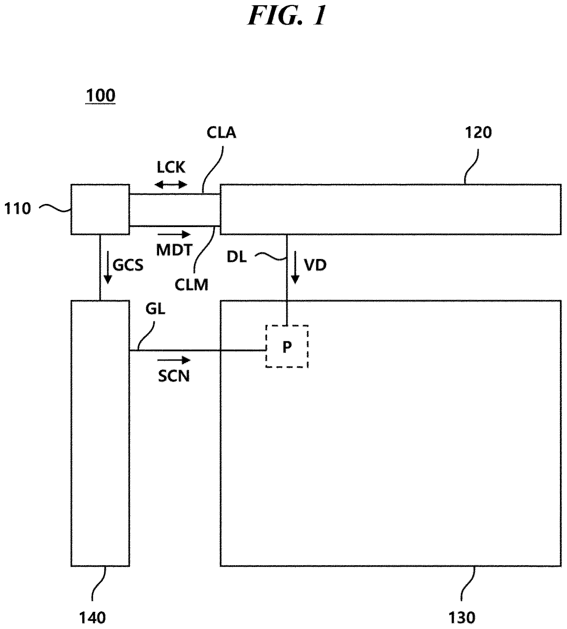

FIG. 1 is a configuration diagram of a display device according to an embodiment.

Referring to FIG. 1, a display device 100 may include a plurality of display driving devices, a display panel 130, and so on. The display driving devices may include a data processing device 110, a data driving device 120, a gate driving device 140, and a host (not shown). Alternatively, the display driving devices may include two or more of the data processing device 110, the data driving device 120, the gate driving device 140, and the host (not shown).

The data processing device 110 may receive image data from other devices.

The data processing device 110 may process the image data received from other devices such that it is adapted to the data driving device 120, and may send the processed image data to the data driving device 120. The data processing device 110 may process the grayscale value of each pixel included in the image data by digital gamma correction, and compensate it in accordance with the characteristics of each pixel.

The data driving device 120 may receive the image data from the data processing device 110, and generate a data voltage VD in accordance with the grayscale value of a pixel included in the image data and supply the data voltage VD to the pixel P.

A plurality of pixels P may be arranged on the display panel 130. Each pixel P may be connected to the data driving device 120 via a data line DL and connected to the gate driving device 140 via a gate line GL.

A scan transistor may be disposed on each pixel P. A gate terminal of the scan transistor may be connected to the gate line GL, and a source terminal thereof may be connected to the data line DL. When the gate driving device 140 supplies a scan signal SCN to the gate line GL, the scan transistor is turned on and the data line DL is connected to the pixel P. After the data line DL is connected to the pixel P, the data voltage VD supplied by the data driving device 120 is transmitted to the pixel P.

To synchronize the timings of the gate driving device 140 and the data driving device 120, the data processing device 110 may send a timing control signal to the gate driving device 140 and the data driving device 120.

The data processing device 110 may send a gate control signal GCS to the gate driving device 140. The gate control signal GCS may include the aforementioned timing control signal. The gate driving device 140 may generate a scan signal SCN in response to the gate control signal GCS and supply the scan signal SCN to the pixel P via the gate line GL.

At least two types of communication lines CLM and CLA may be arranged between the data processing device 110 and the data driving device 120. The data processing device 110 may send a first communication signal MDT via a first communication line CLM, and may send or receive a second communication signal LCK via a second communication line CLA. Hereinafter, the first communication line CLM will be called a main communication line, and the second communication line CLA will be called an auxiliary communication line, for convenience of explanation. Also, the first communication signal MDT will be called a main communication signal, and the second communication signal LCK will be called an auxiliary communication signal.

The data processing device 110 may send image data and a timing control signal to the data driving device 120 through the main communication signal MDT, and the data driving device 120 may send status information to the data processing device 110 through the auxiliary communication signal LCK.

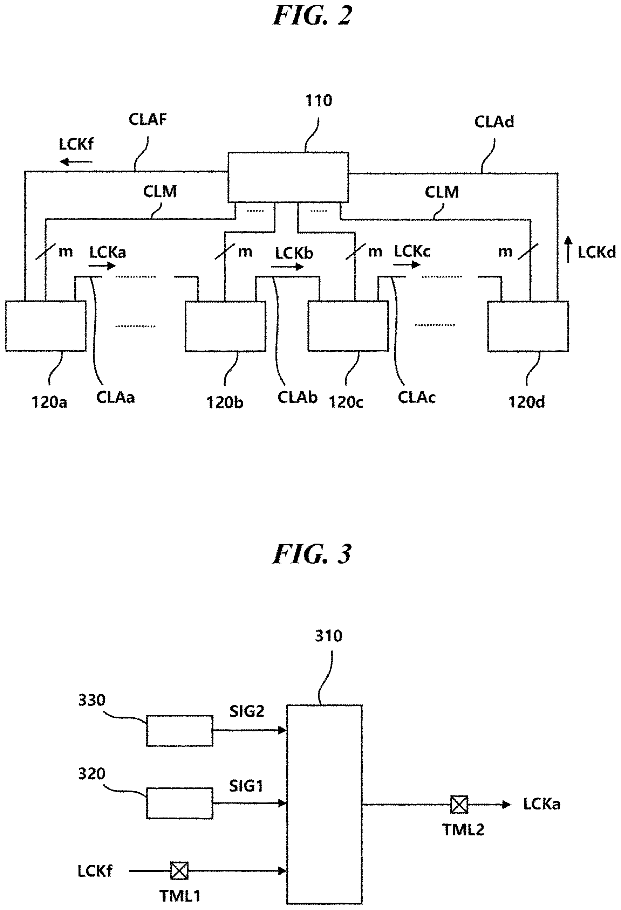

FIG. 2 is a view showing main communication and auxiliary communication between a data processing device and a data driving device according to an embodiment.

Referring to FIG. 2, the data driving device may include a plurality of data driving integrated circuits 120a, 120b, 120c, and 120d.

Also, the data processing device 110 may be communicatively connected to the data driving integrated circuits 120a, 120b, 120c, and 120d via main communication lines CLM. The data processing device 110 may be communicatively connected one on one to the data driving integrated circuits 120a, 120b, 120c, and 120d. For example, the data processing device 110 may be communicatively connected one on one to the second data driving integrated circuit 120b.

Each main communication line CLM may include m electrically insulated lines (m is a natural number). Also, the m lines may be arranged in pairs, and each pair may be capable of LVDS (Low Voltage Differential Signaling) communication.

Such a communication connection structure and a main communication signal (see MDT in FIG. 1) sent and received between the data processing device 110 and the data driving integrated circuits 120a, 120b, 120c, and 120d may be collectively referred to as main communication.

The data processing device 110 and the data driving integrated circuits 120a, 120b, 120c, and 120d may send and receive information through auxiliary communication as well as through main communication.

Auxiliary communication between the data driving integrated circuits 120a, 120b, 120c, and 120d may be connected in a cascade. For example, the first data driving integrated circuit 120a disposed at a starting portion of the cascade may send a first auxiliary communication signal LCKa to the second data driving integrated circuit 120b via a first auxiliary communication line CLAa. Also, the second data driving integrated circuit 120b may combine an internally generated state signal and the first auxiliary communication signal LCKa to generate a second auxiliary communication signal LCKb and send it to the third data driving integrated circuit 120c via a second auxiliary communication line CLAb. Also, the third data driving integrated circuit 120c may combine an internally generated state signal and the second auxiliary communication signal LCKb to generate a third auxiliary communication signal LCKc and send it to the fourth data driving integrated circuit 120d via a third auxiliary communication line CLAc.

The fourth data driving integrated circuit 120d disposed at an end portion of the cascade may combine an internally generated state signal and the third auxiliary communication signal LCKc to generate a fourth auxiliary communication signal LCKd and send it to the data processing device 110 via a fourth auxiliary communication line CLAd. Here, the fourth data driving integrated circuit 120d disposed at the end portion of the cascade may send an auxiliary communication signal to the data processing device 110 through auxiliary communication.

The data processing device 110 may check the status of the data driving integrated circuits 120a, 120b, 120c, and 120d based on an auxiliary communication signal received from the fourth data driving integrated circuit 120d disposed at the end portion of the cascade. Also, the data processing device 110 may send an auxiliary communication feedback signal LCKf for the auxiliary communication signal to the first data driving integrated circuit 120a disposed at the starting portion of the cascade via an auxiliary communication feedback line CLAF. For example, the data processing device 110 may generate an auxiliary communication feedback signal LCKf in the same form as the auxiliary communication signal received from the fourth data driving integrated circuit 120d and send it to the first data driving integrated circuit 120a.

FIG. 3 is a configuration diagram of a portion of a first data driving integrated circuit of FIG. 2 that processes an auxiliary communication signal.

Referring to FIG. 3, the first data driving integrated circuit may include an auxiliary communication input terminal TML1 and an auxiliary communication output terminal TML2, and also may include a signal combination circuit 310, a state signal generation circuit 320, and so on.

The signal combination circuit 310 may combine an input signal received from the auxiliary communication input terminal TML1 and a state signal SIG1 generated by the state signal generation circuit 320 to generate an output signal and output the output signal to the auxiliary communication output terminal TML2. Here, the input signal may be the aforementioned auxiliary communication feedback signal LCKf, and the output signal may be the aforementioned first auxiliary communication signal LCKa.

The state signal generation circuit 320 may check the state of communication of the main communication line and generate a state signal SIG1 in accordance with the state of communication of the main communication line. For example, if the state of communication of the main communication line is normal, the state signal generation circuit 320 may generate a state signal SIG1 having high-level voltage, and if the state of communication of the main communication line is not normal, it may generate a state signal SIG1 having low-level voltage.

The signal combination circuit 310 may generate an output signal by the AND combination of signals. For example, the signal combination circuit 310 may generate an output signal by the AND combination of an input signal received from the auxiliary communication input terminal TML1 and a state signal SIG1 generated by the state signal generation circuit 320.

The first data driving integrated circuit may further include a performance evaluation feedback circuit 330. The performance evaluation feedback circuit 330 may evaluate the communication performance of the main communication line and generate a performance evaluation feedback signal SIG2 which indicates the communication performance.

Also, the signal combination circuit 310 may combine the state signal SIG1 and the performance evaluation feedback signal SIG2 to generate an output signal.

For example, the first data driving integrated circuit may receive a BER (Bit Error Rate) test pattern from the data processing device and evaluate the communication performance based on the rate of recognition of the BER (Bit Error Rate) pattern. Also, if the rate of recognition is equal to or higher than a certain level, the performance evaluation feedback circuit 330 may generate a performance evaluation feedback signal SIG2 having high-level voltage, and if the rate of recognition is lower than a certain level, it may generate a performance evaluation feedback signal SIG2 having low-level voltage.

The signal combination circuit 310 may have a number of combination modes. For example, in a first combination mode, the signal combination circuit 310 may generate an output signal by the AND combination of only an input signal received from the auxiliary communication input terminal TML1 and a state signal SIG1 generated by the state signal generation circuit 320. Also, in a second combination mode, the signal combination circuit may generate an output signal by the AND combination of only the state signal SIG1 and the performance evaluation feedback signal SIG2. Also, in a third combination mode, the signal combination circuit 310 may bypass the input signal as an output signal.

While FIG. 3 depicts a portion of the first data driving integrated circuit that processes an auxiliary communication signal, the same components may be included in the other driving integrated circuits as well. Each data driving integrated circuit may differ only in their position in the cascade.

Referring to FIGS. 2 and 3, each data driving integrated circuit 120a, 120b, 120c, and 120d may include the same terminals TML1 and TML2 as the first data driving integrated circuit 120a, and also may include a signal combination circuit 310, a state signal generation circuit 320, a performance evaluation feedback circuit 330, and so on. Regarding their connections for auxiliary communication, the auxiliary communication input terminal of the first data driving integrated circuit 120a disposed at the starting portion of the cascade may be connected to the data processing device 110, and the auxiliary communication output terminal thereof may be connected to the second data driving integrated circuit 120b. Also, the auxiliary communication input terminal of the fourth data driving integrated circuit 120d disposed at the end portion of the cascade may be connected to the third data driving integrated circuit 120c, and the auxiliary communication output terminal thereof may be connected to the data processing device 110.

Each data driving integrated circuit 120a, 120b, 120c, and 120d may find out that a glitch has occurred to itself or any other data driving integrated circuit through a cascade connection structure and the auxiliary communication feedback signal LCKf.

As an example, the fourth data driving integrated circuit 120d may determine that a glitch has occurred to itself if an internal state signal SIG1 has low-level voltage. Also, if an input signal has low-level voltage, the fourth data driving integrated circuit 120d may determine that a glitch has occurred to at least one of the first data driving integrated circuit 120a, the second data driving integrated circuit 120b, and the third data driving integrated circuit 120c.

As another example, the firth data driving integrated circuit 120a may determine that a glitch has occurred to itself if an internal state signal SIG1 has low-level voltage. Also, if an input signal has low-level voltage, the first data driving integrated circuit 120a may determine that a glitch has occurred to at least one of the second data driving integrated circuit 120b, the third data driving integrated circuit 120c, and the fourth data driving integrated circuit 120d. The first data driving integrated circuit 120a receives an auxiliary communication feedback signal LCKf from the data processing device 110. Incidentally, the data processing device 110 generates an auxiliary communication feedback signal LCKf in response to the fourth auxiliary communication signal LCKd which reflects the state of each data driving integrated circuit 120a, 120b, 120c, and 120d. Thus, the first data driving integrated circuit 120a is able to determine the state of each data driving integrated circuit 120a, 120b, 120c, and 120d

Once a data driving integrated circuit determines that a glitch has occurred to itself or any other data driving integrated circuit, the data driving integrated circuit may switch to a mode corresponding to this glitch.

For example, if the first data driving integrated circuit 120a determines that a glitch has occurred to itself or at least one of the second data driving integrated circuit 120b, the third data driving integrated circuit 120c, and the fourth data driving integrated circuit 120d, it may switch to a mode for retraining communication clocks of the main communication line. Once it is determined that communication in the main communication line is not normal, the state signal SIG1 may have low-level voltage, and therefore the auxiliary communication signal may have low-level voltage. Also, upon finding out that the auxiliary communication signal has low-level voltage, the data processing device 110 may switch to a mode for retraining communication clocks of the main communication line and send a clock training signal for retraining communication clocks to the data driving integrated circuits 120a, 120b, 120c, and 120d.

If a glitch occurs to any data driving integrated circuit other than the first data driving integrated circuit 120a, in the cascade of the data driving integrated circuits 120a, 120b, 120c, and 120d, it may not be possible for the first data driving integrated circuit 120a to detect a glitch in the other data driving integrated circuits by the auxiliary communication signal alone within the cascade structure. The auxiliary communication feedback signal LCKf is a signal that supplements this problem, which allows the data driving integrated circuits 120a, 120b, 120c, and 120d wired together in a single cascade structure to detect a glitch almost simultaneously.

Meanwhile, the data processing device 110 may use the auxiliary communication feedback signal LCKf for other purposes. For example, the data processing device 110 may send a reset signal through the auxiliary communication feedback signal LCKf. The data processing device 110 may generate a reset signal, for example, a signal having low-level voltage, regardless of the fourth auxiliary communication signal LCKd, and send the reset signal to the first data driving integrated circuit 120a via an auxiliary communication feedback line CLAP. Then, the reset signal may be sequentially propagated through auxiliary communication in the cascade of the data driving integrated circuits 120a, 120b, 120c, and 120d. Through this auxiliary communication, all of the data driving integrated circuits 120a, 120b, 120c, and 120d may receive the reset signal.

Upon receiving the reset signal, the data driving integrated circuits 120a, 120b, 120c, and 120d may enter into a reset state. For example, the data driving integrated circuits 120a, 120b, 120c, and 120d may lower the data rate of main communication via the main communication line after receiving the reset signal.

The data driving device may include a plurality of data driving integrated circuits that receive image data from the data processing device via the main communication line. The plurality of data driving integrated circuits may be connected in a cascade for auxiliary communication. Also, the fourth data driving integrated circuit disposed at the end portion of the cascade may send a fourth auxiliary communication signal to the data processing device through auxiliary communication, and the first data driving integrated circuit disposed at the start portion of the cascade may receive an auxiliary communication feedback signal from the data processing device in response to the fourth auxiliary communication signal.

Each data driving integrated circuit may perform auxiliary communication by combining an input signal received from the auxiliary communication input terminal and a state signal indicating the state of communication of the main communication line and outputting a combined signal to the auxiliary communication output terminal. Each data driving integrated circuit may output an auxiliary communication signal obtained by the AND combination of an input signal and a state signal to the auxiliary communication output terminal.

The auxiliary communication output terminal of the fourth data driving integrated circuit may be connected to the data processing device, and the auxiliary communication input terminal of the first data driving integrated circuit may be connected to the data processing device.

If an input signal or a state signal has low-level voltage, each data driving integrated circuit may determine that a glitch has occurred to at least one of the plurality of data driving integrated circuits.

If an input signal or a state signal has low-level voltage, each data driving integrated circuit may switch to a mode for retraining communication clocks of the main communication line.

If the first auxiliary communication signal has low-level voltage, the data processing device may form an auxiliary communication feedback signal with low-level voltage and send it.

The data processing device may send a reset signal through a feedback signal, and the plurality of data driving integrated circuits may receive the reset signal through auxiliary communication. Also, each data driving integrated circuit may lower the data rate of main communication via the main communication line after receiving the reset signal. Also, each data driving integrated circuit may receive image data in a high-speed mode, and receive setting data for the high-speed mode at a low-speed mode in which the data rate is lower than in the high-speed mode.

The data processing device may include a main communication circuit and an auxiliary communication circuit. Also, the main communication circuit may send image data to the plurality of data driving integrated circuits via the main communication lines. Also, the auxiliary communication circuit may receive a fourth auxiliary communication signal from the fourth data driving integrated circuit disposed at the end portion of the cascade, among the plurality of data driving integrated circuits connected in a cascade for auxiliary communication, and may send an auxiliary communication feedback signal to the first data driving integrated circuit disposed at the start portion of the cascade in response to the fourth auxiliary communication signal.

If the fourth auxiliary communication signal indicates that at least one of the main communication lines has a glitch, the main communication circuit may send to the main communication lines a clock training signal for retraining communication clocks of the image data.

Also, the main communication circuit may send image data at a high-speed mode, and send setting data for the high-speed mode at a low-speed mode in which the data rate is lower than in the high-speed mode.

Also, if the fourth auxiliary communication signal indicates that at least one of the main communication lines has a glitch, the main communication circuit may switch from the high-speed mode to the low-speed mode.

The auxiliary communication circuit may send a reset signal through an auxiliary communication feedback signal in order to reset the plurality of data driving integrated circuits.

Also, if the fourth auxiliary communication signal has low-level voltage, the auxiliary communication circuit may form a feedback signal with low-level voltage and send it. Also, if the fourth auxiliary communication signal has low-level voltage, the main communication circuit may send to the main communication lines a clock training signal for retraining communication clocks of the image data.

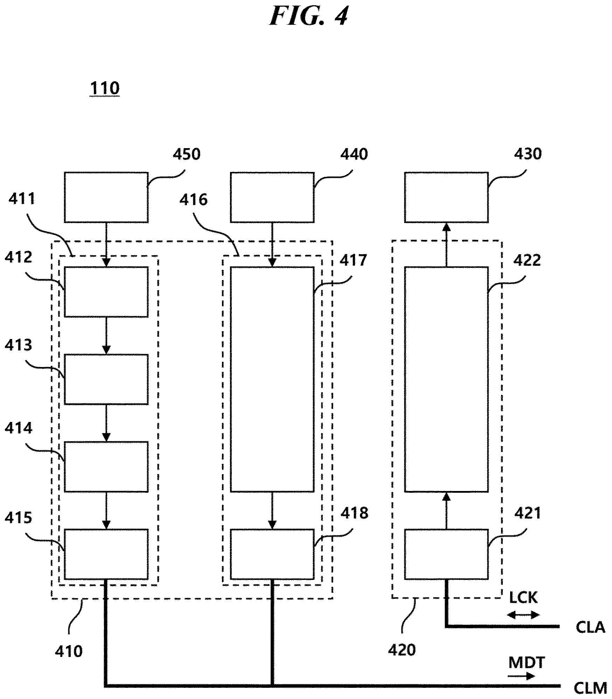

FIG. 4 is a configuration diagram of the data processing device according to an embodiment of the present disclosure.

Referring to FIG. 4, the data processing device may include a P-main communication circuit 410, a P-auxiliary communication circuit 420, a P-control circuit 430, a P-memory 440, an image data processing circuit 450, and so on.

The P-main communication circuit 410 may send a main communication signal MDT to the data driving device via a main communication line CLM. The P-main communication circuit 410 may send image data and first control data during an active period via the main communication line CLM and send second control data during a blank period. Also, the data driving device may drive pixels on the display panel in accordance with the image data. The first control data may include a control value that is applied line by line or pixel by pixel on the display panel, and the second control data may include a control value that is applied with a longer period than it is applied line by line or pixel by pixel or a control value that is applied frame by frame.

The P-main communication circuit 410 may send setting data at a first data rate via the main communication line CLM. Also, the P-main communication circuit 410 may send image data, first control data, and second control data at a second data rate higher than the first data rate via the main communication line CLM. The mode for performing communication at the first data rate may be called a low-speed communication mode, and the mode for performing communication at the second data rate may be called a high-speed communication mode.

The P-main communication circuit 410 may include a P-high speed communication mode 411 for performing high-speed communication and a P-low speed communication circuit 416 for performing low-speed communication.

The P-high speed communication circuit 411 may include a packer 412, a scrambler 413, an encoder 414, a first serializer 415, and so on.

The packer 412 may receive image data from the image data processing circuit 450 which processes image data. Also, the packer 412 may receive first control data and/or second control data from the P-control circuit 430 or the P-memory 440. Also, the packer 412 may package at least one of the image data, the first control data, and the second control data to generate transmission data.

The scrambler 413 may scramble the transmission data. Scrambling may prevent bits of the same value, e.g., 1 or 0, from sequentially occurring K times or more (K is a natural number greater than or equal to 2) in a transmitted data stream by scrambling the bits of the transmitted data. Scrambling is performed according to a predetermined protocol. According to the predetermined protocol, the data driving device may restore the stream of the scrambled bits to the original data.

The scrambler 413 may scramble the image data only but not the first control data or the second control data.

The encoder 414 may encode P bits of a transmitted stream in transmitted data into Q bits. P may be 6, for example, and Q may be 7, for example. Encoding 6 bits of data into 7 bits of data is often referred to as 6B7B encoding. 6B7B encoding is a method of encoding into DC-balanced codes.

The encoder 414 may encode transmitted data in such a way that the bits of the transmitted stream increases. Also, the encoded data may be decoded into DC-balanced codes, for example, 6B7B, by the data driving device. In another aspect, the encoded transmitted data may be restored to the original bits by the data driving device.

The encoder 414 may use LRLC (Limited Run Length Code) in the encoding of transmitted data. "Run Length" is a sequence of bits of the same value that occur sequentially, and LRLC is to encode transmitted data to ensure that the transmitted data has no "run length" that exceeds a certain size.

In a case where the encoder 414 encodes data using LRLC, the data driving device may decode data according to the LRLC scheme used by the encoder 414.

The encoder 414 may split the transmitted data into a certain number of units and encode each unit of data. Also, the encoder 414 may perform DC-balanced coding or LRLC coding according to an encoding table stored in the P-memory 440. The data driving device may have a decoding table corresponding to the encoding table, and may perform decoding of each unit of data according to the decoding table.

Transmitted data which is to be passed in parallel within the data processing device 110 may be serially converted by the first serializer 415. Also, the first serializer 415 may send the serially converted transmitted data to the data driving device. In this case, a series of data which is transmitted serially may form a transmitted stream, and may be in the form of main communication signal MDT in the light of signal.

The main communication line CLM may include m electrically insulated lines (m is a natural number). Also, the m lines may be arranged in pairs, and each pair may be capable of LVDS (Low Voltage Differential Signaling) communication. If the main communication line CLM includes two or more pairs, the first serializer 415 may send transmitted data in a distributed manner across the pairs.

The transmitted data may be composed of bits, and a plurality of bits may constitute a single symbol. A single symbol may consist of 8 bits or 10 bits. Also, a plurality of symbols may constitute a single piece of pixel data. The pixel data may sequentially include information corresponding to subpixels of R (Red), G (Green), B (Blue), etc. The data driving device may have data received in bits aligned in bytes and in pixels.

The P-low speed communication circuit 416 may include a setting data processing circuit 417 and a second serializer 418.

The setting data processing circuit 417 may receive a setting value from the P-memory 440 and/or the P-control circuit 430 and generate setting data corresponding to the setting value.

The setting data is data that is transmitted at a low speed, which may include a setting value for the data driving device that is required before high-speed communication. For example, the setting data may include setting values for a circuit that performs high-speed communication in the data driving device.

The second serializer 418 may serially convert the setting data and send the serially converted setting data to the data driving device via the main communication line CLM.

The second serializer 418 may convert the setting data into a form of Manchester code and send it.

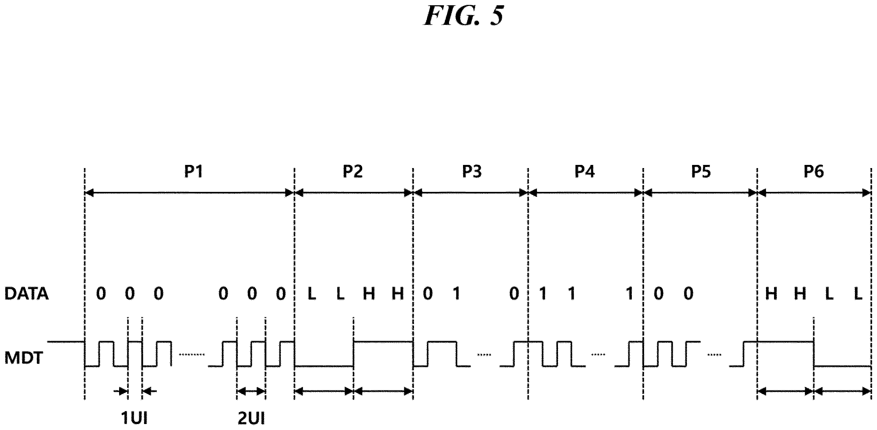

FIG. 5 is an illustration of a protocol of a main communication signal transmitted in Manchester code.

Referring to FIG. 5, the main communication signal transmitted in Manchester code may include six parts P1 to P6.

A low-speed communication clock may be sent through the first part P1. Data bits in the main communication signal may be encoded into Manchester-II code. In this case, a single bit may include two unit pulses UI. In Manchester-II coding, if all of the data bits transmitted in the first part P1 represent 0 or 1, a pulse synchronized with the low-speed communication clock may be transmitted.

The receiving side (data driving device) may perform training in accordance with the low-speed communication clock received in the first part P1.

After the transmission of the low-speed communication clock, a start signal indicating the start of a message may be transmitted in the second part P2, and an end signal indicating the end of the message may be transmitted in the sixth part P6 which is the last portion of the message.

A message header is transmitted in the third part P3. The message header may include parameter values such as data type, mode, an identification number (ID) of the receiving side, data length, and a configuration register address of the receiving side.

Also, the fourth part P4 may include information that is sent and received through the message.

Also, the fifth part P5 may include a CRC (cyclical redundancy check) value.

Referring again to FIG. 4, the data processing device may include a P-auxiliary communication circuit 420, and the P-auxiliary communication circuit 420 may include a P-auxiliary communication control circuit 422 and a P-auxiliary communication signal processing circuit 421.

The P-auxiliary communication signal processing circuit 421 may receive an auxiliary communication signal LCK from an auxiliary communication line CLA or transmit the auxiliary communication signal LCK to the auxiliary communication line CLA. The transmitted auxiliary communication signal LCK may be called an auxiliary communication feedback signal to distinguish it.

The P-auxiliary communication control circuit 422 may check the auxiliary communication signal LCK received from the auxiliary communication line CLA, and, if the auxiliary communication signal LCK indicates that the data driving device has a glitch, may send an auxiliary communication feedback signal in the same form as the auxiliary communication signal LCK to the auxiliary communication line CLA. Here, a line for receiving the auxiliary communication line LCK from the data driving device and a line for sending the auxiliary communication feedback signal may be physically separated from each other.

The P-auxiliary communication control circuit 422 may generate an auxiliary communication feedback signal and send it to the auxiliary communication line CLA, regardless of the auxiliary communication signal LCK received from the auxiliary communication line CLA. For example, the P-auxiliary communication control circuit 422 may include a reset signal in the auxiliary communication feedback signal and send it, when it wants to change the mode of the data driving device.

The P-control circuit 430 is a circuit that controls the overall functions of the data processing device 110. The P-control circuit 430 may determine the operation mode of the data processing device and determine the circuits to operate in each operation mode.

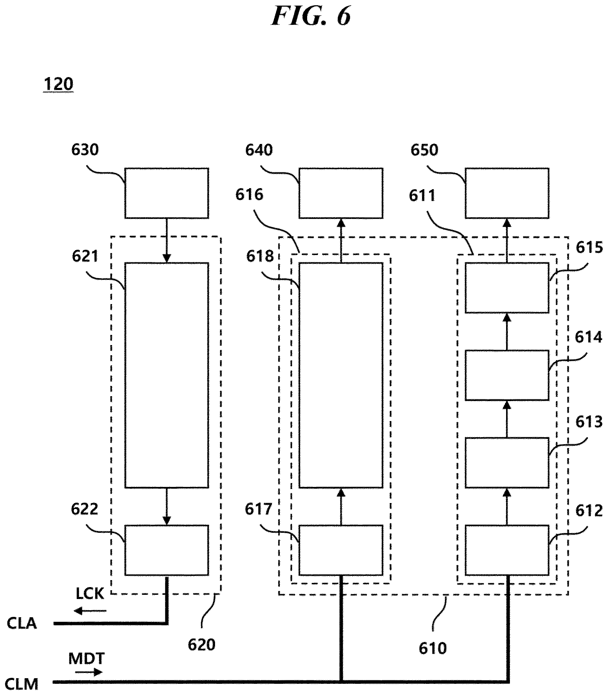

FIG. 6 is a configuration diagram of the data processing device according to an embodiment. If the data driving device is composed of a plurality of data driving integrated circuits, the configuration illustrated in FIG. 6 may be understood as a configuration included in a single data driving integrated circuit.

Referring to FIG. 6, the data driving device 120 may include a D-main communication circuit 610, a D-auxiliary communication circuit 620, a D-control circuit 630, a D-memory 640, and a data driving circuit 650.

The D-main communication circuit 610 may receive a main communication signal MDT to the data processing device via a main communication line CLM. The D-main communication circuit 610 may receive image data and first control data during an active period via the main communication line CLM and send second control data during a blank period. Also, the data driving circuit 650 may drive pixels on the display panel in accordance with the image data. The first control data may include a control value that is applied line by line or pixel by pixel on the display panel, and the second control data may include a control value that is applied with a longer period than it is applied line by line or pixel by pixel or a control value that is applied frame by frame.

The D-main communication circuit 610 may receive setting data at a first data rate via the main communication line CLM. Also, the D-main communication circuit 610 may receive image data, first control data, and second control data at a second data rate higher than the first data rate via the main communication line CLM. The mode for performing communication at the first data rate may be called a low-speed communication mode, and the mode for performing communication at the second data rate may be called a high-speed communication mode.

The D-main communication circuit 610 may include a D-high speed communication mode 611 for performing high-speed communication and a D-low speed communication circuit 616 for performing low-speed communication.

The D-main communication circuit 610 may include a first deserializer 612, a decoder 613, a descrambler 614, an unpacker 615, and so on.

The first deserializer 612 may parallelize the main communication signal MDT received serially via thein communication line CLM on a per-byte or per-symbol basis.

Also, the decoder 613 may decode data that is encoded into DC-balanced code, for example, 6B7B code, or encoded into LRLC.

The decoder 613 may perform decoding of each unit of data according to a decoding table stored in the D-memory 640. In this case, if a unit of data included in the data is found not to be included in the decoding table, the decoder 613 may generate an error signal.

Also, the decoder 613 may check whether received data meets LRLC coding standards. For example, upon finding out that received data has a run length that exceeds a reference value, the decoder 613 may generate an error signal.

The descrambler 614 may restore scrambled data to the original data according to a predetermined protocol.

The unpacker 615 may align received data in pixels and send image data for each pixel to the data driving circuit 650.

The D-low speed communication circuit 616 may include a second deserializer 617 and a setting data storage circuit 618.

The second deserializer 617 may parallelize setting data received serially via the main communication line CLM. The setting data may be received in the form of Manchester code, and the second deserializer 617 may decode the received setting data into Manchester code and then transmit it to the setting data storage circuit 618.

The setting data storage circuit 618 may receive the setting data and store setting values included in the setting data in the D-memory 640 or apply them to a circuit corresponding to the setting values.

The P-memory in the data processing device and the D-memory in the data driving device may be in the form of a register, or may be in the form of ROM (read only memory) or RAM (random access memory).

The D-auxiliary communication circuit 620 may include a D-auxiliary communication control circuit 621 and a D-auxiliary communication signal processing circuit 622.

The D-auxiliary communication control circuit 621 may include a state signal generation circuit (see 320 in FIG. 3) and a performance evaluation feedback circuit (see 330 in FIG. 3) which have been explained with reference to FIG. 3. The D-auxiliary communication signal processing circuit 622 may include a signal combination circuit (see 310 in FIG. 3) which has been explained with reference to FIG. 3.

The D-auxiliary communication control circuit 621 may check for a glitch in the main communication signal MDT, a glitch in the main communication circuit 610, and/or a glitch in other components, and generate a state signal. Alternatively, the D-auxiliary communication control circuit 621 may evaluate the performance of main communication based on the rate of recognition of a test pattern received in order to evaluate the performance of main communication and generate a performance evaluation feedback signal according to an evaluation result.

The D-auxiliary communication signal processing circuit 622 may generate an auxiliary communication signal LCK by using the state signal or the performance evaluation feedback signal and send the auxiliary communication signal LCK to the auxiliary communication line CLA.

The D-auxiliary communication signal processing circuit 622 may combine an auxiliary communication signal sent by another data driving integrated circuit from the auxiliary communication line CLA or an auxiliary communication feedback signal sent by the data processing device and the state signal or the performance evaluation feedback signal to generate an auxiliary communication signal LCK.

The D-control circuit 630 is a circuit that controls the overall functions of the data driving device 120. The D-control circuit 630 may determine the operation mode of the data processing device and determine the circuits to operate in each operation mode.

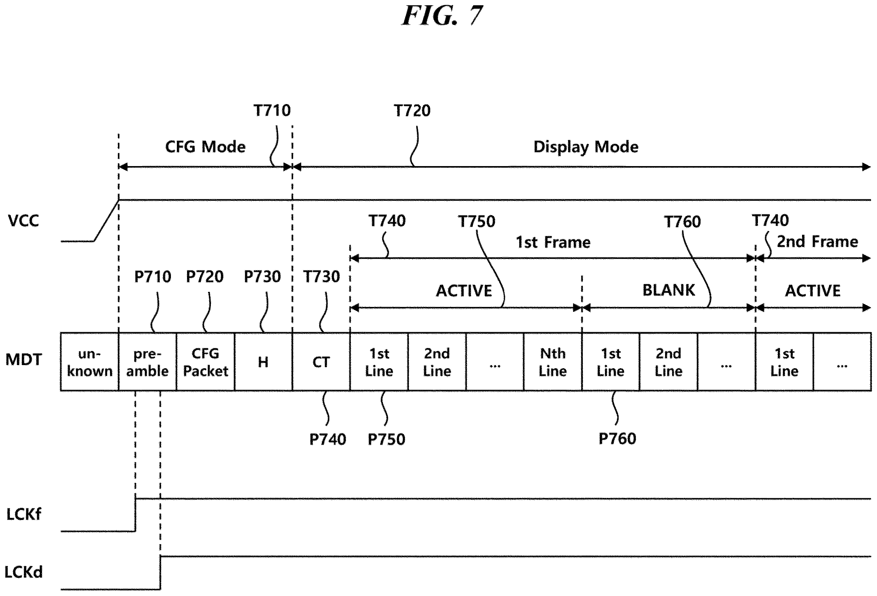

FIG. 7 is a view showing a sequence of a primary signal according to an embodiment.

Referring to FIG. 7, a waveform of a driving voltage VCC is illustrated. The waveform changes in such a way that the driving voltage VCC has low-level voltage at the beginning and has high-level voltage at a certain point in time. The point in time at which the driving voltage VCC changes to high-level voltage may be viewed as an operation timing at which display driving devices, for example, a data processing device and a data driving device, go into operation.

After the operation timing, the data processing device and the data driving device may operate in a setting data mode. After completion of the operation in the setting data mode, the data processing device and the data driving device may operate in a display mode.

In a setting data period T710, the data processing device may consecutively send a preamble packet P710 and a setting data packet P720 through a main communication signal MDT.

The data processing device may change the voltage of the auxiliary communication feedback signal LCKf from low level to high level. Through such a voltage change, the data processing device may inform the data driving devices that the preamble packet is being sent.

The voltage of the main communication signal MDT in the preamble packet P710 may change periodically between high level and low level. The data driving device may train a low-speed communication clock for receiving the setting data packet P720 by using the preamble packet P710.

The data processing device may send the preamble packet P710 and the setting data packet P720 at a first data rate which is relatively slow. The low-speed communication clock has the first data rate, and the data driving device may train the low-speed communication clock by using the preamble packet P710.

Once the low-speed communication clock is trained, the data driving device may inform the data processing device of a clock training state through an auxiliary communication signal LCKd. For example, once the low-speed communication clock is trained, the data driving device may change the voltage of the auxiliary communication signal LCKd from low level to high level. The waveform of the auxiliary communication signal LCKd illustrated in FIG. 7 is an auxiliary communication signal of the data driving integrated circuit disposed at the end portion of the cascade of a plurality of data driving integrated circuits.

The data processing device may send the setting data packet P720 after confirming that the data driving device has trained the low-speed communication clock through the auxiliary communication signal LCKd.

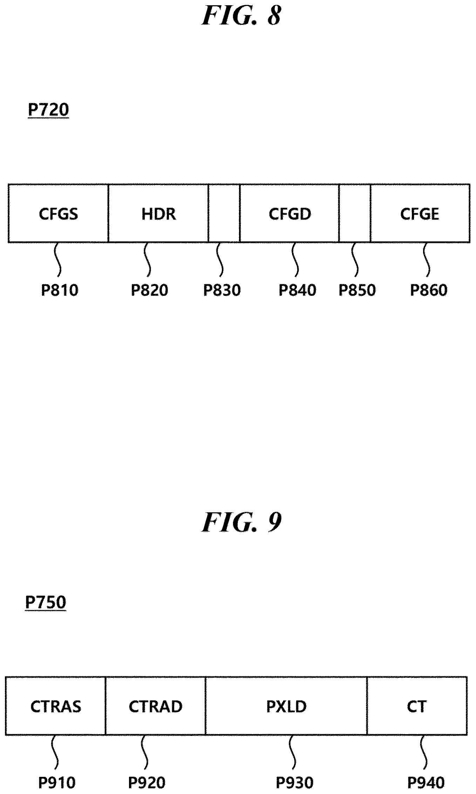

FIG. 8 is a configuration diagram of a setting data packet according to an embodiment.

Referring to FIG. 8, the setting data packet P720 may include a setting data start packet P810, a setting data header packet P820, a setting data header verification packet P830, a setting data body packet P840, a setting data body verification packet P850, and a setting data end packet P860.

The setting data start packet P810 may indicate the start of the setting data packet P720. Also, the setting data start packet P860 may indicate the end of the setting data packet P720.

The setting data header packet P820 may include an indication value for communication of the setting data body packet P840. For example, the setting data header packet P820 may include an indication value for the length of the setting data body packet P840.

The setting data header verification packet P830 may include a verification value for verifying the data validity of the setting data header packet P820. For example, the setting data header verification packet P830 may include a CRC value of the setting data header packet P820.

The setting data body packet P840 may include a setting value for the data driving device which is required before high-speed communication. For example, the setting data body packet P840 may include setting values for a circuit that performs high-speed communication in the data driving device.

The setting data body verification packet P850 may include a verification value for verifying the data validity of the setting data body packet P840. For example, the setting data body verification packet P850 may include a CRC value of the setting data body packet P840.

Referring again to FIG. 7, after completion of the transmission of the setting data packet P720, the data processing device may maintain the main communication signal MDT at high-level voltage or at low-level voltage for a certain amount of time. Such a packet may be called a high voltage packet or a low voltage packet P730. Upon receiving the high voltage packet or the low voltage packet P730, the data driving device may recognize that a setting data period T710 has ended. Upon receiving a signal that maintains high-level voltage or low-level voltage for a certain amount of time, clocks become out of synch, and the data driving device may be aware of this and recognize that the setting data period T710 has ended.

Meanwhile, after recognizing the setting data end packet (see P860 in FIG. 8) through a first communication signal MDT, if the first communication signal MDT is maintained at high-level voltage or low-level voltage for a certain amount of time, the data driving device may determine that the setting data period T710 has ended and enter into the display period T720.

After the setting data period T710 has ended, the data processing device and the data driving device may enter into the display period T720. The display period T720 may include a clock training period T730 and a frame period T740. Once high-communication clocks are trained in the clock training period T730, the frame period T740 occurs repeatedly afterwards.

During the clock training period T730, the data processing device may send a clock training pattern P740 to the data driving device at a second data rate. Also, the data driving device may train a high-speed communication clock corresponding to the second data rate. Here, the second data rate may have a higher frequency than the first data rate.

If the data driving device fails to train the high-speed communication clock during the clock training period T730, the data driving device may send a clock training failure signal through an auxiliary communication signal LCKd. For example, the data driving device may inform the data processing device of a clock training failure while lowering the voltage of the auxiliary communication signal from high level to low level.

In the case of a clock training failure for the high-speed communication clock, the data processing device may send an additional clock training pattern P740 or return to the setting data mode.

Once the clock training of the high-speed communication clock is completed, the data processing device and the data driving device may enter into the frame period T740.

The frame period T740 may include an active period T750 and a blank period T760. The active period T750 is a period during which image data and control data are sent line by line, and the blank period T760 may be a period during which image data line by line is not sent. The blank period T760 may be split into a horizontal blank interval and a vertical blank interval. Hereinafter, the blank period T760 will be described as the vertical blank interval for convenience of explanation.

During the active period T750, the data processing device may send a line data packet P750 line by line.

FIG. 9 is a configuration diagram of a line data packet according to an embodiment.

Referring to FIG. 9, the line data packet P750 may include a line data start packet P910, a first control data body packet P920, an image data packet P930, and a clock training pattern P940.

The line data start packet P910 may indicate the start of the line data packet P750. LRLC coding or scrambling may not be applied to the line data start packet P910.

The first control data body packet P920 may include setting values that may be changed line by line or frequently. For example, the first control data body packet P920 may include a polarity value that indicates the polarity of each pixel and a value that indicates whether the scrambler is reset or not.

The image data packet P930 may include grayscale values of pixels arranged on one line.

Also, the clock training pattern P940 may include a pattern signal for training a high-speed communication clock.

Referring again to FIG. 7, the data processing device may send the line data packet P750 for every line during the active period T750 and then enter into the blank period T760.

During the blank period T760, the data processing device may send the control data packet P760 for each virtual line.

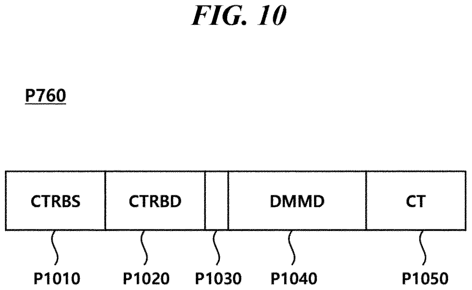

FIG. 10 is a configuration diagram of a control data packet according to an embodiment.

Referring to FIG. 10, the control data packet P760 may include a control data start packet P1010, a second control data body packet P1020, a verification packet P1030, a dummy packet P1040, and a clock training pattern P1050.

The control data start packet P1010 may indicate the start of the control data packet P760. LRLC coding or scrambling may not be applied to the control data start packet P1010.

The second control data body packet P1020 may include setting values that are changed frame by frame or are not changed often. Alternatively, in some embodiments, the second control data body packet P1020 may include setting values that are similar to or the same as the first control body packet.

The verification packet P1030 may include CRC data. Here, the CRC data may include a CRC value received in the setting data period. For example, the CRC data may include a CRC value of the setting data header packet (see P820 in FIG. 8) which is included in the setting data header verification packet (see P830 in FIG. 8). Also, the CRC data may include a CRC value of the setting data body packet (see P840 in FIG. 8) which is included in the setting data body verification packet (see P850 in FIG. 8).

The data driving device may check for communication error by comparing the CRC value received in the setting data period and the CRC value received in the verification packet P1030.

As described above, according to one embodiment, different types of communication are performed for each period. Under this condition, the one embodiment proposes a data validity verification method optimized for the type of communication in each period.

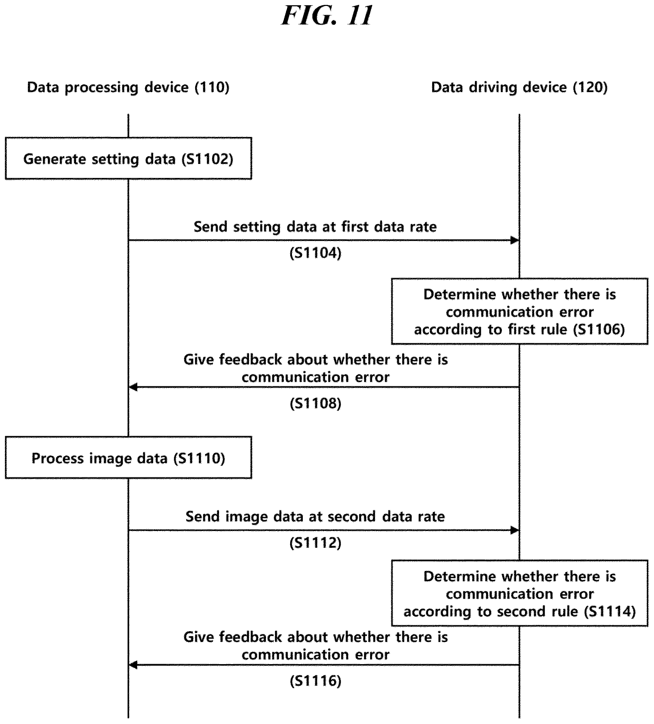

FIG. 11 is a flowchart of a data validity verification method according to an embodiment.

Referring to FIG. 11, the data processing device 110 may generate setting data (S1102). The setting data may include high-speed communication setting values for facilitating high-speed communication - for example, communication for sending and receiving data at a second data rate.

The data processing device 110 may send setting data to the data driving device 120 at a first data rate via a main communication line. Also, the data driving device 120 may receive the setting data at the first data rate (S 1104).

The data driving device 120 may determine whether the setting data has an error according to a first rule (S1106). Also, the data driving device 120 may give feedback to the data processing device 110 about whether the setting data has an error or not (S1108).

The data processing device 110 may convert image data so as to be fitted to the data driving device 120 (S1110).

Moreover, the data processing device 110 may send image data to the data driving device 120 at the second data rate via the main communication line. Also, the data driving device 120 may receive the image data at the second data rate (S1112). Here, the second data rate may be a higher value that the first data rate. Communication at the first data rate may be deemed as low-speed communication, and communication at the second data rate may be deemed as high-speed communication.

The data driving device 120 may determine whether the setting data has an error according to a second rule which is different from the first rule (S1114). Also, the data driving device 120 may give feedback to the data processing device 110 about whether the setting data has an error or not (S1116).

In the data driving device 120, communication at the first data rate may be performed by a D-low speed communication circuit, and communication at the second data rate may be performed by a D-high speed communication circuit.

As an example of determining whether there is a communication error, the D-low speed communication circuit may determine whether the setting data has an error through CRC check.

As another example, upon finding an error in a process of decoding the image data, the D-high speed communication circuit may determine that the image data is erroneous data.

Upon finding out that a unit of data included in the image data is not included in a decoding table, the D-high speed communication circuit may determine that the image data is erroneous data. The data processing device may perform LRLC coding or 6B7B coding of a unit of data. If it fails to find that unit of data in a decoding table for LRLC coding or 6B7B coding, the D-high speed communication circuit may determine that an error has occurred in the process of communication of that unit of data.

Upon finding out that received image data has a run length that exceeds a reference value, the D-high speed communication circuit may determine that the image data is erroneous data. If the D-high speed communication circuit receives data that has a run length that exceeds this reference value even though the data processing device has sent the image data after LRLC coding such that there is no run length that exceeds the reference value, it is highly likely that this is caused by an error in the communication process. Accordingly, upon finding out that received image data has a run length that exceeds the reference value, the high-speed communication circuit may determine that the image data is erroneous data.

Errors may be double-checked. For example, the D-low speed communication circuit may determine whether the setting data has an error through CRC check. In this case, a CRC value may be stored in a memory. Moreover, the D-high speed communication circuit may receive second control data at the second data rate, and the second control data may include a CRC comparison value. The D-high speed communication circuit may determine whether there is a communication error by comparing the CRC comparison value and the CRC check value. The CRC comparison value received through high-speed communication at the second data rate may have an error, and the CRC check value received through low-speed communication at the first data rate may have an error. The D-high speed communication circuit may determine that one of these values has an error, and give feedback to the data processing device about the communication error.

The main communication signal may be an embedded clock signal. Since the main communication signal has a clock embedded in it, the data driving device may require clock training in an initial period of communication.

The D-high speed communication circuit may include a clock recovery circuit, and the clock recovery circuit may train a high-speed communication clock at the second data rate by receiving a clock training signal from the data processing device.

The clock training signal may have a given pattern. For example, the clock training signal may have a pattern in which high-level voltage and low-level voltage alternate at a frequency of the second data rate. After receiving the clock training signal and completing the training of a high-speed communication clock, the clock recovery circuit may determine whether there is a communication error by checking what pattern the clock training signal has. For example, after completing clock training, the clock recovery circuit may determine whether there is a communication error by recognizing data through the clock training signal and checking whether the data has a normal pattern or not.

The frequency of a clock recovered from the embedded clock signal may vary slightly. However, a drastic change in frequency may be highly suggestive of a communication error.

The D-high speed communication circuit may train the high-speed communication clock at the second data rate by receiving a clock training signal through the main communication line, and maintain the high-speed communication clock by receiving an embedded clock signal through the main communication line, and at the same time may determine whether there is a communication error by comparing the frequency of the high-speed communication clock at the time of completion of the training and the frequency of the high-speed communication clock at a time after the completion of the training. In this case, the clock recovery circuit in the D-high speed communication circuit may have a PLL (Phase Lock Loop) or a DLL (Delay Lock Loop).

Meanwhile, the D-high speed communication circuit may evaluate communication performance through a BER (Bit Error Rate) test pattern received at the second data rate.

The data processing device may send the BER test pattern to the data driving device. Also, the data driving device may count the number of reception errors by using the BER test pattern. Moreover, the data driving device may give feedback about a communication error if the number of reception errors is equal to or more than a threshold.

In a case where the data driving device includes a plurality of data driving integrated circuits, a BER test may be conducted sequentially for each of the data driving integrated circuits. For example, the BER test may be performed on the first data driving integrated circuit and then on the second data driving integrated circuit.

A data driving integrated circuit on which the BER test is being performed may ignore an auxiliary communication signal transmitted from another data driving integrated circuit. Also, a data driving integrated circuit on which the BER test is not being performed may bypass an auxiliary communication signal transmitted from another data driving integrated circuit and output it.

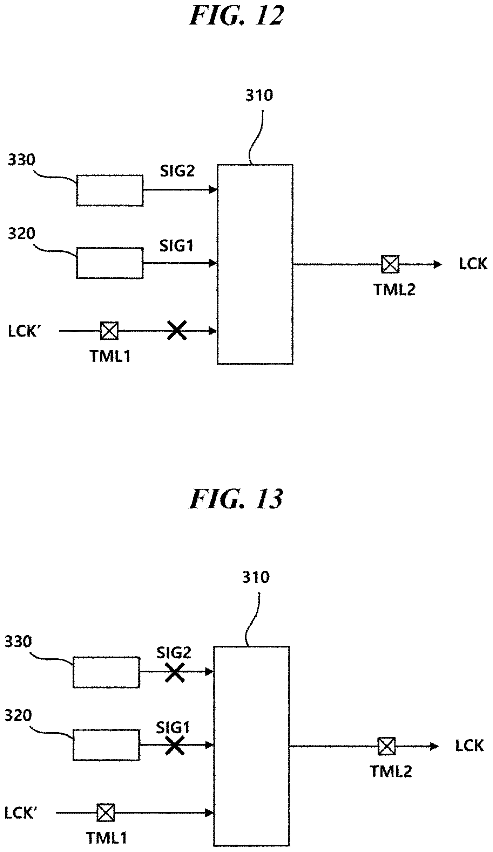

FIG. 12 is a view showing how a data driving integrated circuit according to an embodiment ignores an auxiliary communication signal transmitted from another data driving integrated circuit. FIG. 13 is a view showing how a data driving integrated circuit according to an embodiment bypasses an auxiliary communication signal transmitted from another data driving integrated circuit.

Referring to FIG. 12, the performance evaluation feedback circuit 330 in the data driving integrated circuit may generate a performance evaluation feedback signal SIG2 in accordance with a BER test result. For example, if the number of reception errors in the BER test is equal to or more than a threshold or the normal reception rate is less than a given value, the performance evaluation feedback circuit 330 may lower the voltage of the performance evaluation feedback signal SIG2 from high level to low level.

In this instance, the signal combination circuit 310 may combine the performance evaluation feedback signal SIG2 and the state signal SIG1 to generate an auxiliary communication signal LCK.

Also, when the performance evaluation feedback circuit 330 performs a BER test, the signal combination circuit 310 may ignore an auxiliary communication signal LCK' transmitted from another data driving integrated circuit.

Referring to FIG. 13, the data driving integrated circuit may generate neither the performance evaluation feedback signal SIG2 nor the state signal SIG1 when it is not performing the BER test. Also, the signal combination circuit 310 may bypass an auxiliary communication signal LCK' transmitted from another data driving integrated circuit and output it.

In this manner, the data driving device may receive feedback from the data driving integrated circuits individually about their BER test results.

Meanwhile, the data processing device may send symbols each composed of N bits (N is a natural number greater than or equal to 2), and the data driving device may match each symbol to a value of M bits (M is a natural number less than N).

Such a method of sending and receiving a bit value for each symbol may be used when sending and receiving a power-saving control value, and also may be used when sending and receiving packets, such as a line data packet or a control data packet, whose probability of error needs to be lowered.

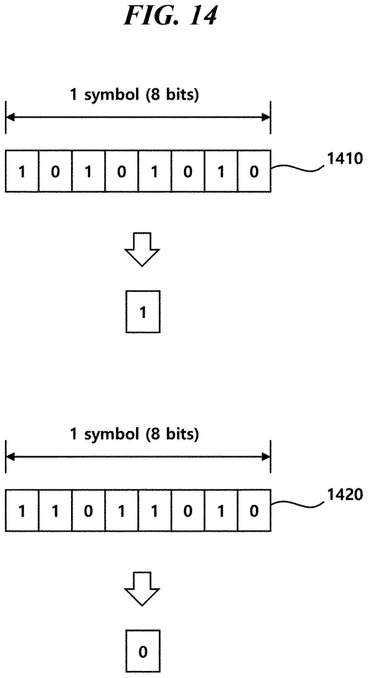

FIG. 14 is an illustration of a symbol setting value according to an embodiment.

Referring to FIG. 14, the data driving device may receive a first symbol 1410 consisting of 8 bits. Also, the data driving device may match the first symbol 1410 to 1-bit value having a value of 1.

Moreover, the data driving device may receive a second symbol 1420 consisting of 8 bits. Also, the data driving device may match the second symbol 1420 to 1-bit value having a value of 0.

By sending and receiving a bit value for each symbol, the error probability of the setting value may be lowered. Also, the data driving device may even correct an error in some bit, if any, on its own.

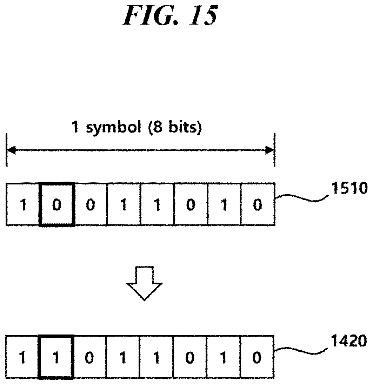

FIG. 15 is a view showing how a bit error in a symbol is corrected according to an embodiment.

Referring to FIG. 15, the data driving device may receive a third symbol 1510 consisting of 8 bits. If the data driving device is supposed to receive only the first symbol and second symbol described with reference to FIG. 14, the third symbol 1510 may be considered erroneous, and the third symbol 1510 may be compared with the first symbol and/or the second symbol 1420. Also, the data driving device may select the third symbol 1510 and the second symbol 1420 which is more similar and then correct an error bit in the third symbol 1510 by using the second symbol 1420.

Alternatively, the data driving device may find out that the third symbol 1510 is not an symbol that it is supposed to receive, by using the symbols it has received before or after receiving the third symbol 1510, and then correct an error in some bit of the third symbol 1510.

The data driving device may include a first communication circuit which receives first data at a first data rate via a communication line and determines whether the first data has an error according to a first rule, a second communication circuit which receives second data via a communication line at a second data rate which is higher than the first data rate and determines that the second data has an error according to a second rule which is different from the first rule, and a data driving circuit which drives pixels on a display panel in accordance with image data included in the second data.

Upon finding out that a unit of data included in the second data is not included in a decoding table, the second communication circuit may determine that the second data is erroneous data.

Also, upon finding out that the second data has a run length that exceeds a reference value, the second communication circuit may determine that the second data is erroneous data.

Moreover, upon finding an error in a process of decoding the second data, the second communication circuit may determine that the second data is erroneous data.

The first communication circuit may determine whether the first data has an error through CRC (cyclical redundancy check) check. Also, the first communication circuit may store a CRC check value in a memory, and the second communication circuit may receive third data at the second data rate and determine whether there is a communication error by comparing a CRC comparison value included in the third data and the CRC check value.

The second communication circuit may train a communication clock at the second data rate by receiving a clock training signal, and determine whether there is a communication error by checking what clock training pattern the clock training signal has after completion of the training.

The second communication circuit may train a communication clock at the second data rate by receiving a clock training signal via the communication line, maintain the communication clock by receiving an embedded clock signal via the communication line, and determine whether there is a communication error by comparing the frequency of the communication clock at the time of completion of the training and the frequency of the communication clock at a time after the completion of the training.

The second communication circuit may evaluate communication performance through a BER (Bit Error Rate) test pattern received at the second data rate. Also, the first communication circuit may receive a setting value for a BER test at the first data rate.

The second communication circuit may receive symbols each consisting of N bits (N is a natural number greater than or equal to 2) through the second data, and may match each symbol to a value of M bits (M is a natural number less than N). Also, the second communication circuit may correct an error in a bit included in one symbol by using another symbol received before or after the one symbol.

To sum up some of what is related to data validity from the perspective of the data processing device, the data processing device may include a first communication circuit which sends first data and first verification data for the first data at a first data rate via a communication line, and a second communication circuit which sends second data including image data for driving pixels on a display panel via the communication line at a second data rate which is higher than the first data rate, and sends second verification data corresponding to the first verification data at the second data rate.

The first verification data may include a CRC (cyclical redundancy check) value for the first data, and the second verification data may include a CRC comparison value corresponding to the CRC check value. Also, the second communication circuit may send the second data during an active period of one frame period including the active period and a blank period, and may send third data including the second verification data during the blank period.

The second communication circuit may encode the second data by an LRLC (Limited Run Length Coding) method according to a predetermined encoding table.

The first communication circuit may send a setting value for a BER (Bit Error Rate) test at the first data rate, and the second communication circuit may send a BER test pattern at the second data rate.

Also, the second communication circuit may match a value of M bits (M is a natural number) to a symbol consisting of N bits (N is a natural number greater than M) and include the symbol in the second data when sending the second data.

If it is determined that there is an error in data validity, the data processing device and the data driving device may correct the error by switching the operation mode. Alternatively, the data processing device and the data driving device may switch to a different mode once their operation in one mode is completed.

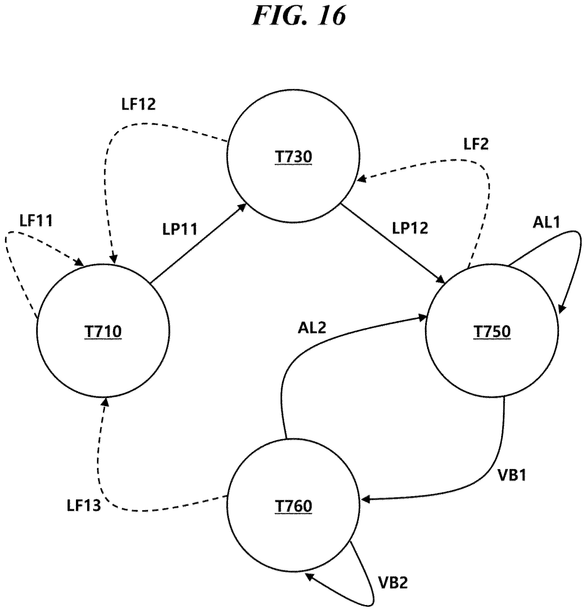

FIG. 16 is a view showing a mode conversion sequence for a display driving device according to an embodiment.

Referring to FIG. 16, the data processing device and the data driving device may operate in a first mode during the setting data period T710, and the P-low speed communication circuit of the data processing device and the P-low speed communication circuit of the data driving device may send and receive setting data at a first data rate in the first mode.

In the case of an error in the first mode (LF11), the data processing device and the data driving device may perform the first mode again.

Once the operation in the setting data period T710 is completed properly (LP11), the data processing device and the data driving device may switch from the first mode to a second mode and perform an operation in the clock training period T730.

In the second mode, the data processing device may send a clock training signal at the second data rate, and the data driving device may train a high-speed communication clock to communicate it at the second data rate.

In the case of an error in the second mode (LF12), the data processing device and the data driving device may switch to the first mode and then perform the operation in the first mode again.

Once the operation in the clock training period T730 is completed properly (LP12), the data processing device and the data driving device may switch from the second mode to a third mode and perform an operation in the active period T750.

In the third mode, the data processing device may send image data and first control data at the second data rate, and the data driving device may drive pixels on the display panel in accordance with the image data.

In the third mode, the data processing device and the data driving device may send the image data and the first control data line by line. In this case, once an operation for one line is performed properly (AL1), the same operation may be performed for the next line.

In the case of an error in the third mode (LF2), the data processing device and the data driving device may switch to the second mode and perform clock training again. The data processing device and the data driving device may switch from the third mode to the second mode rather than to the first mode in the case of an error in the third mode. According to this sequence, the data processing device and the data driving device may reduce error correction time. In particular, since the third mode is an active period, this sequence may minimize screen tearing time, thereby improving image quality.

Once the operation in the active period T750 is completed properly (VB1), the data processing device and the data driving device may switch from the third mode to a fourth mode and perform an operation in the blank period T760.

In the fourth mode, the data processing device may send the second control data at the second data rate, and the data driving device may apply a setting value required to drive the display panel in accordance with the second control data.

In the fourth mode, the data processing device and the data driving device may send the second control data for each virtual line. In this case, once the operation for one virtual line is performed properly (VB2), the same operation may be performed for the next virtual line.

Once the operation in the blank period T760 is completed properly (AL2), the data processing device and the data driving device may switch from the fourth mode to the third mode and perform an operation in the active period T750.

In the case of an error in the fourth mode (LF13), the data processing device and the data driving device may switch to the first mode. The data processing device and the data driving device may determine most of the settings again from defaults. Since the fourth mode is performed in the blank period T760 in which the display panel is not refreshed, image quality problems may be minimized even through the recovery time is rather long.

Looking at this sequence from the perspective of the data driving device, the data driving device may include a D-low speed communication circuit, a D-high speed communication circuit, a D-control circuit, and a data driving circuit.

The D-low speed communication circuit may receive setting data at a first data rate in the first mode.

The D-low speed communication circuit may train a high-speed communication clock to communicate it at a second data rate in the second mode, receive image data and first control data by using the high-speed communication clock in the third mode, and receive second control data by using the high-speed communication clock in the fourth mode.

The D-control circuit may switch to the second mode upon completion of the first mode, switch to the third mode upon completion of the second mode, switch to the second mode upon finding a glitch in the third mode, and switch to the first mode upon finding a glitch in the fourth mode.

Also, the data driving circuit may pixels on the display panel in accordance with the image data.

Here, the second data rate may be a higher value that the first data rate.

The D-control circuit may switch to the first mode upon finding a glitch in the second mode.

The D-high speed communication circuit may include a clock recovery circuit, and the setting data may include a setting value of the clock recovery circuit.

The D-high speed communication circuit may include an equalizer circuit, and the setting data may include a setting value of the equalizer circuit.

If the first mode is repeated L times or more (L is a natural number equal to or greater than 2), the setting value of the equalizer circuit may be changed when sent. As an example, if the operation of switching to the first mode is repeated L times or more within one frame time after switching from the first mode to the second mode, the data processing device may change the setting value of the equalizer circuit of the D-high speed communication circuit to send it.

The data driving device may further include a D-auxiliary communication circuit for sending an auxiliary communication signal via an auxiliary communication line.

When the D-control circuit has found a glitch in the third mode or the fourth mode, the D-auxiliary communication circuit may send a signal indicating the glitch to the data processing device through an auxiliary communication signal.

The image data, the first control data, and the second control data are embedded clock signals, and the D-high speed communication circuit may maintain the high-speed communication clock by extracting clocks from the embedded clock signals.

If communication clocks are not maintained, the D-control circuit may determine that there is a glitch.

The third mode may be performed during an active period of one frame period in which the display is refreshed, and the fourth mode may be performed during a blank period of the one frame period.

Looking at this sequence from the perspective of the data processing device, the data processing device may include a P-low speed communication circuit, a P-high speed communication circuit, and a P-control circuit.

The P-low speed communication circuit may send setting data at a first data rate in the first mode.

The P-low speed communication circuit may send a clock training signal to train a high-speed communication clock at a second data rate in the second mode, transmit image data and first control data in accordance with the high-speed communication clock in the third mode, and send second control data in accordance with the high-speed communication clock in the fourth mode.

The P-control circuit may switch to the second mode upon completion of the first mode, switch to the third mode upon completion of the second mode, switch to the second mode upon finding a glitch in the third mode, and switch to the first mode upon finding a glitch in the fourth mode.

The second data rate may be higher than the first data rate.

The P-control circuit may switch to the first mode upon finding a glitch in the second mode.

If the conversion from the second mode to the first mode is repeated L times or more (L is a natural number equal to or greater than 2), the P-low speed communication circuit may change a setting value for communication at the second data rate and include this setting value in the setting data when sending the setting data.

The data processing device may further include an auxiliary communication circuit for receiving an auxiliary communication signal via an auxiliary communication line. Also, the P-control circuit may check for a glitch in each mode through the auxiliary communication signal.

Moreover, if the auxiliary communication signal is converted from high-level voltage to low-level voltage, the P-control circuit may recognize that a glitch has occurred.

In addition, a display driving device according to an embodiment may perform a low-power operation.

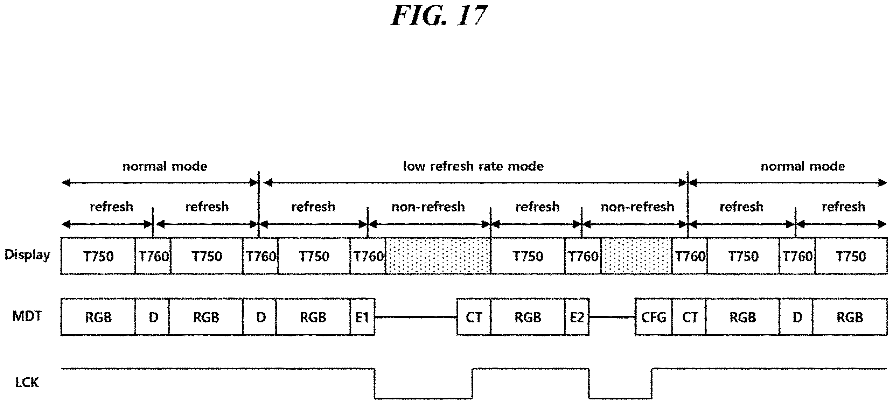

FIG. 17 is a view showing a sequence of a low-power operation performed by a display driving device according to an embodiment.

Referring to FIG. 17, in a normal mode, a display device may alternately perform an operation in the active period T750 and an operation in the blank period T760. Also, the display device may refresh an image on the display panel during the active period.

To refresh the image on the display panel, the data processing device may send image data RGB to the data driving device during the active period T750. The image data RGB may be sent line by line. To send setting values line by line, the data processing device may send first control data also during the active period T750.

Meanwhile, the data processing device may send second control data for low-power operation during the blank period T760. The second control data may include a power-saving control value for low-power operation.

In the normal mode, the power-saving control value may be set to disable D when sent. Upon receiving the power-saving control value set to disable D, the data driving device may control an output circuit to operate normally.

To lower the refresh rate in a power-saving mode, the data processing device may set the power-saving control value to enable E1 and E2 when sending it.

Upon receiving the power-saving control value set to enable E1 and E2, the data driving device may disable some circuits. For example, the data driving circuit of the data driving device may include a latch circuit for latching image data pixel by pixel, a DAC (digital-analog-converter) for converting output data of the latch circuit into analog data voltage, and an output buffer for outputting data voltage as pixels. Also, the data driving device may determine whether to turn on or off the DAC and the output buffer according to the power-saving control value.

Upon receiving the power-saving control value set to enable E1 and E2, the data driving device may disable the main communication circuit. In this case, since the high-speed communication clock is not recovered if the main communication circuit is disabled, the data driving device may convert the voltage of an auxiliary communication signal LCK to low level. The data processing device is able to find out that the data driving device has entered into the power-saving mode, by detecting the conversion of the voltage of the auxiliary communication signal LCK.

The main communication circuit may train the high-speed communication clock by receiving a clock training signal, or may maintain the high-speed communication clock by receiving an embedded clock signal. By the way, if no main communication signal is supplied in the power-saving mode, the data driving device is not able to maintain the high-speed communication clock. Accordingly, the data driving device may send a clock training signal CT to the data driving device before the active period T750 recurs. Also, the data driving device may train the high-speed communication clock again through the clock training signal CT, and may inform the data processing device of completion of the training through an auxiliary communication signal LCK.

When switching from the power-saving mode to the normal mode, the display device may send setting data CFG again. The image data RGB may be sent at the second data rate, and the setting data CFG may be sent at the first data rate which is lower than the second data rate.

Upon completion of the operation of receiving the setting data CFG, the data driving device may convert the voltage of the auxiliary communication signal LCK from low level to high level.

From which process to restart the data driving device after the power-saving mode, between the clock training of the high-speed communication clock and the transmission and reception of the setting data, may be determined depending on the power-saving control value.

The power-saving control value may include a first power-saving control value and a second power-saving control value.

Here, the first power-saving control value may include a value for determining whether to enter into the power-saving mode or not. For example, in a case where the first power-saving control value is set to enable, the data driving device may enter into the power-saving mode, and in a case where the first power-saving control value is set to disable, the data driving device may operate in the normal mode without entering into the power-saving mode.

Next, the second power-saving control value may indicate which process the data processing device and the data driving device will restart from after the power-saving mode. For example, if the second power-saving control value is a value indicating a display mode, the data processing device and the data driving device may restart from a clock training process for high-speed communication. On the other hand, if the second power-saving control value is a value indicating a setting data mode, the data processing device and the data driving device may restart from a process of sending and receiving setting data through low-speed communication.

The data driving device may include a D-main communication circuit and a data driving circuit. The D-main communication circuit may receive image data and first control data during an active period via a main communication line, and receive second control data during a blank period. Also, the data driving circuit may drive pixels on the display panel in accordance with the image data, and determine the power-saving operation of the output circuit in accordance with a power-saving control value included in the second control data.

The data driving circuit also may control the power-saving operation of the D-main communication circuit in accordance with the power-saving control value.

The data driving device may further include a D-auxiliary communication circuit which sends an auxiliary communication signal via an auxiliary communication line and indicates that the D-main communication circuit has entered into the power-saving mode through the auxiliary communication signal.

The D-main communication circuit may train a high-speed communication clock for receiving image data by receiving a clock training signal, and may indicate through the auxiliary communication signal that the D-main communication circuit has entered into the normal mode.

The power-saving control value may include a first power-saving control value for controlling the power-saving operation of the D-main communication circuit and a second power-saving control value for controlling a procedure for switching from the power-saving mode to the normal mode.

If the second power-saving control value is a first value, the D-main communication circuit may train a high-speed communication clock for receiving image data by receiving a clock training signal.

If the second power-saving control value is a second value, the D-main communication circuit may be on standby for receiving data at the first data rate which is lower than the second data rate for receiving image data.

The D-main communication circuit may receive a clock training signal corresponding to the second data rate after receiving setting data at the first data rate.

The D-main communication circuit may receive symbols each consisting of N bits (N is a natural number equal to or greater than 2), and may match each symbol to a power-saving control value consisting of M bits (M is a natural number less than N).

The data driving circuit may include a latch circuit for latching image data pixel by pixel, a DAC (digital-analog-converter) for converting output data of the latch circuit into analog data voltage, and an output buffer for outputting data voltage as pixels, and may determine whether to turn on or off the DAC and the output buffer according to the power-saving control value.

The data processing device may include an image data processing circuit and a P-main communication circuit. The image data processing circuit may process image data for driving pixels on the display panel. Also, the P-main communication circuit may send image data and first control data during an active period via a main communication line, and may send second control data containing a power-saving control value during a blank period.

The data processing device may further include a P-auxiliary communication circuit for receiving an auxiliary communication signal via an auxiliary communication line. Also, the P-main communication circuit may send a value indicating the power-saving operation of the data driving device through a power-saving control value, and the P-auxiliary communication circuit may find out that the data driving device has entered into the power-saving mode through the auxiliary communication signal.

Upon finding out that the data driving device has entered into the power-saving mode, the P-main communication circuit may operate in the power-saving mode for a certain amount of time.

After the certain amount of time, the P-main communication circuit may send a clock training signal, and, upon finding out that the data driving device has been clock-trained through the P-auxiliary communication circuit, may send image data.

Upon finding out that the data driving device has entered into the power-saving mode through the P-auxiliary communication circuit, after sending a value indicating the normal operation of the data driving device through a power-saving control value, the P-main communication circuit may send a clock training signal to the data driving device.

The power-saving control value may include a first power-saving control value for controlling the power-saving operation of the data driving device and a second power-saving control value for controlling a procedure for switching from the power-saving mode to the normal mode. The P-main communication circuit may set the second power-saving control value to a first value, and, after a certain amount of time, may send a clock training signal to the data driving device.

After a certain amount of time after setting the second power-saving control to the first value, the P-main communication circuit may send setting data at the first data rate which is lower than the second data rate for sending image data.

As described above, according to an embodiment of this disclosure, the accuracy and efficiency of data validity verification may be improved by verifying data validity in data communication in different ways depending on the type and operation mode of sent/received data. Also, according to an embodiment of this disclosure, the amount of power consumed in data communication may be reduced, and the probability of an erroneous operation of entering into the power-saving mode due to a communication error may be minimized. Moreover, according to an embodiment of this disclosure, in the case of an error in one of a plurality of data driving devices, all of the data driving devices may be reset simultaneously, and the operation modes of the data driving device and the data processing device may be synchronized easily. Moreover, according to an embodiment of this disclosure, it becomes easier to manage the operation modes of the data driving device and the data processing device, and the time for recovery from error may be minimized.

The data processing device may be a device that processes image data and sends the image data, and is not to be limited to the foregoing embodiment. For example, the data processing device may be a timing controller that sends image data to a source driver, or a host that sends image data to the timing controller.

The data driving device may be a device that receives image data and is involved in driving pixels on the display panel by using the image data, and is not to be limited to the foregoing embodiment. For example, the data driving device may be a source driver that supplies data voltage to pixels, and or a timing controller that supplies the grayscale value of each pixel to the source driver to adjust the gray level of each pixel.

The above description is only an exemplary description of the technical spirit of the present disclosure, and various modifications and changes may be made by those skilled in the art without departing from the essential characteristics of the present disclosure. Accordingly, the embodiments disclosed in the specification are provided not to limit the technical spirit of the present disclosure, but to describe the technical spirit of the present disclosure, and the scope of the present disclosure is not limited by these embodiments. The protection scope of the present disclosure should be construed by the claims, and all technical spirit within the scope the same as the claims should be understood to be included in the scope of the present disclosure.

## Claims

1. A display driving device comprising:
a first communication circuit which receives first data at a first data rate via a communication line and determines whether the first data has an error according to a first rule;
a second communication circuit which receives second data via the communication line at a second data rate which is higher than the first data rate, and which determines whether the second data has an error according to a second rule which is different from the first rule; and
a circuit that controls pixels on a display panel to be driven in accordance with image data included in the second data.

2. The display driving device of claim 1, wherein the second communication circuit decodes each unit of data of the second data according to a decoding table, and, upon finding out that a unit of data included in the second data is not included in the decoding table, determines that the second data is erroneous data.

3. The display driving device of claim 1, wherein, upon finding out that the second data which is encoded by LRLC (Limited Run Length Code) has a run length that exceeds a reference value, the second communication circuit determines that the second data is erroneous data.

4. The display driving device of claim 1, wherein, upon finding an error in a process of decoding the second data, the second communication circuit determines that the second data is erroneous data.

5. The display driving device of claim 1, wherein the first communication circuit determines whether the first data has an error by checking a CRC (cyclical redundancy check) value.

6. The display driving device of claim 5, wherein the first communication circuit stores a CRC check value in a memory, and the second communication circuit receives third data at the second data rate and determines whether there is a communication error by comparing a CRC comparison value included in the third data and the CRC check value.

7. The display driving device of claim 1, wherein the second communication circuit trains a communication clock at the second data rate by receiving a clock training signal, and determines whether there is a communication error by checking what clock training pattern the clock training signal has after completion of the training.

8. The display driving device of claim 1, wherein the second communication circuit trains a communication clock at the second data rate by receiving a clock training signal via the communication line, maintains the communication clock by receiving an embedded clock signal via the communication line, and determines whether there is a communication error by comparing the frequency of the communication clock at the time of completion of the training and the frequency of the communication clock at a time after the completion of the training.

9. The display driving device of claim 1, wherein the second communication circuit evaluates communication performance through a BER (Bit Error Rate) test pattern received at the second data rate.

10. The display driving device of claim 9, wherein the first communication circuit receives a setting value for a BER test at the first data rate.

11. The display driving device of claim 1, wherein the second communication circuit receives symbols each consisting of N bits (N is a natural number greater than or equal to 2) through the second data, and matches each symbol to a value of M bits (M is a natural number less than N).

12. The display driving device of claim 11, wherein the second communication circuit corrects an error in a bit included in one symbol by using another symbol received before or after the one symbol.

13. A display driving device comprising:
a first communication circuit which sends first data and first verification data for the first data at a first data rate via a communication line; and
a second communication circuit which sends second data including image data for driving pixels on a display panel via the communication line at a second data rate which is higher than the first data rate, and sends second verification data corresponding to the first verification data at the second data rate.

14. The display driving device of claim 13, wherein the first verification data includes a CRC (cyclical redundancy check) value for the first data, and the second verification data includes a CRC comparison value corresponding to the CRC check value.

15. The display driving device of claim 14, wherein the second communication circuit send the second data during an active period of one frame period including the active period and a blank period, and sends third data including the second verification data during the blank period.

16. The display driving device of claim 13, wherein the second communication circuit encodes the second data by an LRLC (Limited Run Length Coding) method according to a predetermined encoding table.

17. The display driving device of claim 13, wherein the first communication circuit sends a setting value for a BER (Bit Error Rate) test at the first data rate, and the second communication circuit sends a BER test pattern at the second data rate.

18. The display driving device of claim 13, wherein the second communication circuit matches a value of M bits (M is a natural number) to a symbol consisting of N bits (N is a natural number greater than M) and includes the symbol in the second data when sending the second data.

19. A display driving method comprising:
receiving first data at a first data rate via a communication line and determines whether the first data has an error according to a first rule;
receiving second data via the communication line at a second data rate which is higher than the first data rate, and which determines whether the second data has an error according to a second rule which is different from the first rule; and
controlling pixels on a display panel to be driven in accordance with image data included in the second data.

20. The display driving method of claim 19, further comprising receiving third data at the second data,
the determining of whether the second data has an error comprises determining whether the first data has an error by checking a CRC (cyclical redundancy check) check and storing a CRC check value in a memory, and
the receiving of third data comprises determining whether there is a communication error by comparing a CRC comparison value included in the third data and the CRC check value.
